# EUROPÄISCHE PATENTSCHRIFT

(11) **EP 0 657 687 B1**
(45) Veröffentlichungstag und Bekanntmachung des Hinweises auf die Patenterteilung: **25.03.1998**
(21) Anmeldenummer: 94119225.4
(22) Anmeldetag: 06.12.1994
(51) Int. Cl.: F22D 1/36

(54) **Anordnung zur Wirkungsgradverbesserung eines Kraftwerkes oder dergleichen**
System for improving the efficiency of a power plant or the like
Système pour améliorer le rendement d'une centrale d'énergie ou similaire

(30) Priorität: 10.12.1993 DE 4342156
(43) Veröffentlichungstag der Anmeldung: 14.06.1995
(73) Patentinhaber: BDAG Balcke-Dürr Aktiengesellschaft, D-40882 Ratingen (DE)
(72) Erfinder: Kienböck, Martin, D-40883 Ratingen (DE); Brasseur, Olivier, Dr., D-40878 Ratingen (DE)
(74) Vertreter: Stenger, Watzke & Ring Patentanwälte

(56) Entgegenhaltungen:
- DE-C- 4 222 811
- FR-A- 1 109 239
- GB-A- 841 040
- GB-A- 2 138 555
- US-A- 2 883 832
- US-A- 4 223 640

## Beschreibung

Die Erfindung betrifft eine Anordnung zur Wirkungsgradverbesserung eines durch Verbrennung fossiler Brennstoffe betriebenen Kraftwerkes oder dergleichen mit Vorwärmung der Verbrennungsluft durch Rückgewinn eines Teiles der im Rauchgas enthaltenen Wärme und mit einer im Bypass zur Vorwärmung der Verbrennungsluft betriebenen Übertragung eines Teiles der im Rauchgas und/oder in der vorgewärmten Verbrennungsluft enthaltenen Wärme auf das Prozeßmedium.

Bei durch Verbrennung fossiler Brennstoffe betriebenen Kraftwerken ist es üblich, die dem Dampferzeuger zugeführte Verbrennungsluft dadurch vorzuwärmen, daß ein Teil der im Rauchgas des Dampferzeugers enthaltenen Wärme rückgewonnen wird. Diese Rückgewinnung erfolgt durch rekuperative oder regenerative Wärmeübertrager, beispielsweise in Form von Rohr- oder Plattenwärmeübertragern oder drehend angetriebenen Luftvorwärmern. Durch die teilweise Nutzung der in den Rauchgasen enthaltenen Wärme zur Vorwärmung der Verbrennungsluft erfolgt eine Wirkungsgradverbesserung des Kraftwerkes.

Aus der GB-A-841 040 war es darüber hinaus bekannt, die Verbrennungsluft vor Eintritt in den Luftvorwärmer durch Prozeßmedium mit niedrigem Druck vorzuwärmen und aus dem in einem ersten Bypass zum Luftvorwärmer geführten Rauchgas Wärme zur Erwärmung von unter höherem Druck stehenden Prozeßmedium auszukoppeln.

Ausgehend von diesem bekannten Stand der Technik liegt der Erfindung die **Aufgabe** zugrunde, die bekannte Anordnung zur Wirkungsgradverbesserung eines durch Verbrennung fossiler Brennstoffe betriebenen Kraftwerkes oder dergleichen derart weiterzubilden, daß sich eine zusätzliche Erhöhung des Wirkungsgrades ergibt.

Die **Lösung** dieser Aufgabenstellung durch die Erfindung ist dadurch gekennzeichnet, daß zusätzlich in der vorgewärmten Verbrennungsluft enthaltene Wärme durch in einem zweiten Bypass zum Luftvorwärmer erfolgende Rezirkulation von im Luftvorwärmer erwärmter Verbrennungsluft zur Erwärmung von unter höherem Druck stehenden Prozeßmedium ausgekoppelt wird.

Da die technische Arbeitsfähigkeit (Exergie) der aus dem im Bypass zum Luftvorwärmer geführten Rauchgas bzw. der rezirkulierenden Verbrennungsluft auf das unter höherem Druck stehende Prozeßmedium übertragenen Wärmemenge wegen des höheren Druckniveaus größer ist als die technische Arbeitsfähigkeit der etwa gleich großen bzw. nur geringfügig größeren Wärmemenge, die aus dem unter geringerem Druck stehenden Prozeßmedium zuvor auf die Verbrennungsluft vor dem Luftvorwärmer übertragen worden ist, ergibt sich durch diesen erfindungsgemäßen Vorschlag eine Verbesserung des Kraftwerk-Gesamtwirkungsgrades von etwa 0,5 bis 1 %, d.h. eine Erhöhung der elektrischen Leistung des Kraftwerkes um etwa 1 bis 2 %. Die Ausnutzung der unterschiedlichen Exergien einerseits der zur Verbrennungsluftvorwärmung aus dem Prozeßmedium entnommenen Wärmemenge und andererseits der aus dem im Bypass zum Luftvorwärmer geführten Rauchgas bzw. der im Bypass zum Luftvorwärmer rezirkulierenden Verbrennungsluft rückgewonnenen Wärmemenge führt somit erfindungsgemäß zu einer beachtlichen Wirkungsgradverbesserung.

Gemäß einem weiteren Merkmal der Erfindung entspricht die im ersten und zweiten Bypass an Hochdruck-Speisewasser oder Hochdruck-Dampf abgegebene Wärmemenge der in einem Niederdruckvorwärmer der Verbrennungsluft vor dem Luftvorwärmer durch Niederdruck-Speisewasser oder Niederdruckdampf zugeführten Wärmemenge.

Bei dem Niederdruckvorwärmer und dem Hochdruck-Wärmeübertrager, die ein- oder mehrstufig ausgeführt sein können, handelt es sich um übliche Apparate; der Verbrennungsluft-Vorwärmer kann ebenfalls in bekannter Weise als rekuperativer oder regenerativer Wärmeübertrager ausgebildet werden.

Bei einer bevorzugten Ausführungsform kann der Verbrennungsluftvorwärmer mehrstufig ausgeführt werden, wobei nur die im höheren Temperaturbereich liegende Stufe bzw. liegenden Stufen durch den Bypass umgangen wird/werden.

Die Erfindung soll nachfolgend anhand eines als Blockschaltbild dargestellten Ausführungsbeispiels erläutert werden.

Das Blockschaltbild zeigt einen Dampferzeuger 1, dem die Verbrennungsluft durch einen Verbrennungsluftkanal 2 zugeführt und aus dem das Rauchgas durch einen Rauchgaskanal 3 abgeführt wird.

Um einen Teil der im Rauchgas enthaltenen Wärme zur Vorwärmung der Verbrennungsluft zu nutzen, ist ein Verbrennungsluftvorwärmer 4 vorgesehen, der als rekuperativer oder regenerativer Wärmeübertrager ausgeführt sein kann. Weiterhin ist im Verbrennungsluftkanal 2 ein Niederdruckvorwärmer 5 angeordnet. Dieser Niederdruckvorwärmer 5 wird entweder durch warmes Speisewasser oder durch Niederdruckdampf beheizt, um die mit einer Temperatur von 30° bis 40° C in den Verbrennungsluftkanal 2 eintretende Verbrennungsluft auf eine Temperatur von 80° bis 150° C zu erwärmen, bevor die Verbrennungsluft in den Verbrennungsluftvorwärmer 4 eintritt. Das zur Beheizung des Niederdruckvorwärmers 5 verwendete Speisewasser steht unter einem Druck zwischen 5 und 30 bar; sofern Niederdruckdampf zur Beheizung des Niederdruckvorwärmers 5 verwendet wird, steht dieser unter einem Druck zwischen 1 und 10 bar.

Im Verbrennungsluftvorwärmer 4 wird die Verbrennungsluft durch das aus dem Dampferzeuger 1 mit 350° bis 250° C austretende Rauchgas auf eine zwischen 250° und 350° C liegende Temperatur aufgeheizt, mit der die Verbrennungsluft in den Dampferzeuger 1 eintritt.

Da die mit niedrigem Druckniveau mittels des Niederdruckvorwärmers 5 in die Verbrennungsluft eingetragene Wärmemenge Q₁ auf höherem Druckniveau aus dem Rauchgas ausgekoppelt werden soll, ist parallel zum Rauchgaskanal 3 ein den Verbrennungsluftvorwärmer 4 umgehender Bypass 6 vorgesehen, in dem ein Hochdruck-Wärmeübertrager 7 angeordnet ist. Durch diesen Bypass 6 wird eine Teilmenge des Rauchgases am Verbrennungsluftvorwärmer 4 vorbeigeführt. Diese Teilmenge des Rauchgases ist darauf abgestimmt, daß dem Rauchgas im Hochdruck-Wärmeübertrager 7 eine Wärmemenge Q₂ entzogen wird, die zusammen mit der weiter unten beschriebenen Wärmemenge Q₂ₐ theoretisch gleich groß, aufgrund der unvermeidlichen Wirkungsgradverluste jedoch geringfügig kleiner als die Wärmemenge Q₁ ist, die der Verbrennungsluft durch den Niederdruckvorwärmer 5 zugeführt wird. Die Übertragung der Wärmemenge Q₂ erfolgt im Hochdruck-Wärmeübertrager 7 auf das unter erheblich höherem Druck stehende Prozeßmedium, beispielsweise auf Speisewasser mit einem Druck von 250 bar und/oder auf Hochdruckdampf mit einem zwischen 2 und 40 bar liegenden Druck.

Erfindungsgemäß ist ein weiterer Hochdruck-Wärmeübertrager 7a in einem Bypass 6a zum Verbrennungsluftvorwärmer 4 angeordnet und wird mit rezirkulierender Verbrennungsluft beheizt, die durch ein Rezirkulationsgebläse 8 umgewälzt wird. Dieser Hochdruck-Wärmeübertrager 7a ist zusätzlich zum Hochdruck-Wärmeübertrager 7 angeordnet und dient ebenso wie dieser dem Rückgewinn einer Wärmemenge Q₂ₐ auf höherem Druckniveau. Beide Hochdruck-Wärmeübertrager 7,7a können ein- oder mehrstufig ausgeführt sein.

Durch den Rückgewinn eines Teiles der im Rauchgas enthaltenen Wärme mit Hilfe des Verbrennungsluftvorwärmers 4 und der Wärmemenge Q₂ mit Hilfe des Hochdruck-Wärmeübertragers 7 ergeben sich am Ende des Rauchgaskanals 3 Rauchgastemperaturen zwischen 180° und 110° C.

Da die technische Arbeitsfähigkeit (Exergie) der dem Teilstrom des Rauchgases im Hochdruck-Wärmeübertrager 7 entnommenen Wärmemenge Q₂ und der der rezirkulierenden Verbrennungsluft im Hochdruck-Vorwärmer 7a entnommenen Wärmemenge Q₂ₐ größer ist als die Exergie der der Verbrennungsluft im Niederdruckvorwärmer 5 zugeführten Wärmemenge Q₁, ergibt sich durch die im Blockschaltbild dargestellte Anordnung eine Verbesserung des Kraftwerk-Gesamtwirkungsgrades um ca. 0,5 bis 1 %. Die mit der beschriebenen Anordnung erzeugbare elektrische Leistung des Kraftwerkes steigt hierdurch um ca. 1 bis 2 %, und zwar allein durch Ausnutzung der Exergie-Differenz zwischen der bei hohem Druckniveau rückgewonnenen Wärmemenge Q₂ und Q₂ₐ und der bei niedrigerem Druckniveau eingespeisten Wärmemenge Q₁.

### Bezugszeichenliste:

- 1: Dampferzeuger
- 2: Verbrennungsluftkanal
- 3: Rauchgaskanal
- 4: Verbrennungsluftvorwärmer
- 5: Niederdruckvorwärmer
- 6: Bypass
- 6a: Bypass
- 7: Hochdruck-Wärmeübertrager
- 7a: Hochdruck-Wärmeübertrager
- 8: Rezirkulationsgebläse
- Q₁: eingespeiste Wärmemenge
- Q₂: rückgewonnene Wärmemenge
- Q₂ₐ: rückgewonnene Wärmemenge

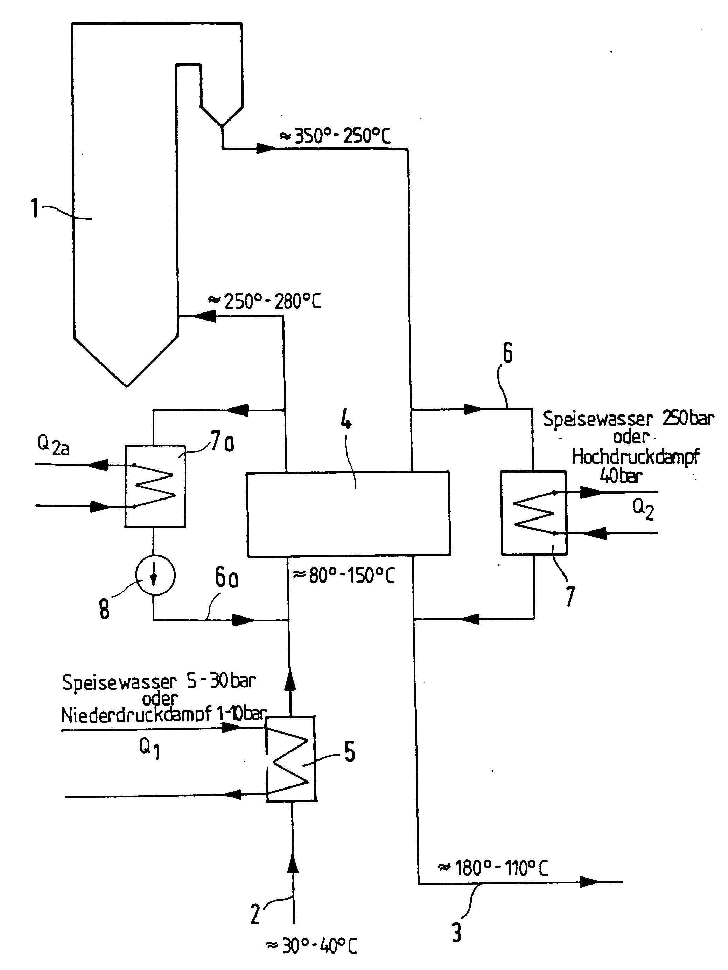

## Patentansprüche

1. Anordnung zur Wirkungsgradverbesserung eines durch Verbrennung fossiler Brennstoffe betriebenen Kraftwerkes oder dergleichen mit Vorwärmung der Verbrennungsluft durch Rückgewinn eines Teiles der im Rauchgas enthaltenen Wärme und mit einer im Bypass zur Vorwärmung der Verbrennungsluft betriebenen Übertragung eines Teiles der im Rauchgas enthaltenen Wärme auf das Prozeßmedium, wobei die Verbrennungsluft vor Eintritt in den Luftvorwärmer (4) durch Prozeßmedium mit niedrigem Druck vorgewärmt wird und aus dem in einem ersten Bypass (6) zum Luftvorwärmer (4) geführten Rauchgas Wärme zur Erwärmung von unter höherem Druck stehenden Prozeßmedium ausgekoppelt wird,
**dadurch gekennzeichnet**,
daß zusätzlich in der vorgewärmten Verbrennungsluft enthaltene Wärme durch in einem zweiten Bypass (6a) zum Luftvorwärmer (4) erfolgende Rezirkulation von im Luftvorwärmer (4) erwärmter Verbrennungsluft zur Erwärmung von unter höherem Druck stehenden Prozeßmedium ausgekoppelt wird.

2. Anordnung nach Anspruch 1, dadurch gekennzeichnet, daß die im ersten und zweiten Bypass (6, 6a) an Hochdruck-Speisewasser oder Hochdruckdampf abgegebene Wärmemenge (Q₂, Q₂ₐ) der in einem Niederdruckvorwärmer (5) der Verbrennungsluft vor dem Luftvorwärmer (4) durch Niederdruck-Speisewasser oder Niederdruckdampf zugeführten Wärmemenge (Q₁) entspricht.

3. Anordnung nach Anspruch 1 oder 2, dadurch gekennzeichnet, daß der Verbrennungsluftvorwärmer (4) mehrstufig ausgeführt ist, wobei nur die im höheren Temperaturbereich liegende(n) Stufe(n) durch den Bypass (6 bzw. 6a) umgangen wird (werden).

## Claims

1. Arrangement for improving the efficiency of a power station or the like operated by combustion of fossil fuels, comprising the preheating of the combustion air by recovery of a portion of the heat contained in the flue gas, and the transfer of a portion of the heat contained in the flue gas to the process medium by means of bypassing the preheating of the combustion air, the combustion air being preheated by process medium of low pressure before entering the air preheater (4), and heat being extracted from the flue gas carried in a first bypass (6) of the air preheater (4) in order to heat process medium which is under higher pressure, characterized in that, in order to heat process medium which is under higher pressure, heat contained in the preheated combustion air is additionally extracted by combustion air heated in the air preheater (4) being recirculated in a second bypass (6a) of the air preheater (4).

2. Arrangement according to Claim 1, characterized in that the heat quantity (Q₂, Q₂ₐ) delivered to high-pressure feedwater or high-pressure steam in the first and second bypass (6, 6a) corresponds to the heat quantity (Q₁) fed in a low-pressure preheater (5) to the combustion air upstream of the air preheater (4) by low-pressure feedwater or low-pressure steam.

3. Arrangement according to Claim 1 or 2, characterized in that the combustion-air preheater (4) is of multi-stage design, only the stage(s) lying in the higher temperature range being bypassed by the bypass (6 or 6a).

## Revendications

1. Agencement destiné à améliorer le rendement d'une centrale d'énergie électrique ou analogue, fonctionnant par la combustion de combustibles fossiles ou analogues avec préchauffage de l'air de combustion, par récupération d'une partie de la chaleur contenue dans les gaz de fumée et avec transfert, commandé en dérivation par rapport au préchauffage de l'air de combustion, au milieu de traitement, d'une partie de la chaleur contenue dans les gaz de fumée, l'air de combustion étant préchauffé, avant l'entrée dans le préchauffeur d'air (4) par le milieu de traitement à une basse pression et de la chaleur étant extraite des gaz de fumée acheminés dans une première dérivation (6) par rapport au préchauffeur d'air (4), pour le chauffage du milieu de traitement soumis à une pression plus élevée,
caractérisé en ce que
de la chaleur, contenue dans l'air de combustion préchauffé, est en outre extraite par recirculation, effectuée dans une deuxième dérivation (6a) par rapport au préchauffeur d'air (4), d'air de combustion chauffé dans le préchauffeur d'air (4) pour le chauffage du milieu de traitement sous pression plus élevée.

2. Agencement selon la revendication 1, caractérisé en ce que la quantité de chaleur (Q₂, Q₂ₐ) fournie à l'eau d'alimentation à haute pression ou à la vapeur à haute pression dans la première et dans la deuxième dérivations (6, 6a) correspond à la quantité de chaleur (Q₁) introduite dans un préchauffeur à basse pression (5) de l'air de combustion avant le préchauffeur d'air (4) par l'eau d'alimentation à basse pression ou par la vapeur à basse pression.

3. Agencement selon la revendication 1 ou 2, caractérisé en ce que le préchauffeur d'air de combustion (4) est réalisé à plusieurs étages, seul(s) le ou les étage(s) situé(s) dans la plage supérieure de température étant contourné(s) par la dérivation (6 ou bien 6a).
